# EUROPEAN PATENT APPLICATION

(11) **EP 3 699 756 A1**
(43) Date of publication of application: **26.08.2020**
(21) Application number: 18882067.4
(22) Date of filing: 24.10.2018
(51) Int. Cl.: G06F 9/445, G06F 21/53, G06F 8/76

(54) **APPLICATION PROGRAM STARTING METHOD AND STARTING APPARATUS, AND COMPUTER READABLE STORAGE MEDIUM**

(30) Priority: 24.11.2017 CN 201711190478
(71) Applicant: Shanghai Zhonglian Technologies Ltd., Co, Shanghai 201419 (CN)
(72) Inventor: XU, Hui, Jiangxi 330008 (CN); MA, Kunxiao, Jiangxi 330008 (CN); YANG, Shizheng, Jiangxi 330008 (CN)
(74) Representative: Ridderbusch, Oliver
(86) International application number: PCT/CN2018/111755
(87) International publication number: WO 2019/100897

(57) **Abstract**

The present invention provides an application program starting method and apparatus, and a computer readable storage medium. The application program starting method comprises the following steps: S101: presetting at least one sandbox program in a smart terminal, wherein a set of operating environment parameters for processing input events are self-defined in the sandbox program; S102: operating the sandbox program; and S103: starting an application program based on the operating environment parameters. After implementation of the technical solutions, interception and injection of the input events are realized on an application layer, without modifying framework layer codes of an Android operating system, and the transplantation workload of a framework layer during operating system version upgrade is greatly reduced. A model of the sandbox program is provided, such that an ordinary application program can operate inside the sandbox program, and the reliability of an application program boundary is ensured, thereby avoiding user data theft caused by a third-party operating system or a hacker program. The operation can be performed on different operating system versions, so that the universality is improved.

## Description

### TECHNICAL FIELD

The present invention relates to the field of application programs, and more particularly to an application program starting method and apparatus, and a computer readable storage medium.

### BACKGROUND

At present, smart terminals such as smart phones and tablet computers, especially smart terminals based on an Android operating system, are applied more and more popularly. Third parties have developed application programs (i.e., APP) that satisfy various application requirements on an architecture of this operating system. These application programs often require human-computer interactions with a user, that is, to receive user's input operations. Especially, application programs such as games that need to connect to an external input device will generate different input events, such as handle input events and touch screen input events. Therefore, it is necessary to modify different input events based on the operating system to meet the application requirements of the application programs.

At present, in terms of the modification of Android input events, the solution of the prior art is to modify framework layer codes, e.g., to modify views or input manager services, thereby achieving the purpose of modifying input events reported by an underlying driver, such that an application program can be smoothly recognized and the modified events are processed.

However, the prior art still has the following problems:
1. A publisher of the Android operating system will often make updates, and it is thus necessary for the updated operating system to transplant framework layer codes again to maintain the recognition and processing of the input events; and
2. If the input events are processed in a manner of modifying the operating system, the modified codes cannot be directly applied to smart terminals of other operating system version (that is, an ROM version), such that the software is less universal.

Therefore, it is necessary to provide a method that can recognize and process input events without modifying the framework layer of the Android operating system, so as to reduce the workload of code transplantation of the framework layer when the Android operating system version is upgraded [as above, it is necessary to provide a more universal modification solution (i.e., the solution of the present invention)]. In addition, this method can be implemented on smart terminals of different operating system versions, thereby improving the universality of software.

### SUMMARY

The present invention provides a method for recognizing and processing an input event without modifying a framework layer of an Android operating system. A sandbox program is preset in a smart terminal to achieve the modification of operating environment parameters. The application program is started based on the operating environment parameters [same as above, the universality needs to be emphasized]. This method also improves the universality of software to meet the needs of operating on smart terminals of different operating system versions.

The present invention discloses an application program starting method, comprising the following steps:
S101: presetting at least one sandbox program in a smart terminal, wherein a set of operating environment parameters for processing input events are self-defined in the sandbox program;
S102: operating the sandbox program; and
S103: starting an application program based on the operating environment parameters.

Preferably, in step S101, the operating environment parameters include member variables of a ViewRootImpl class.

Preferably, after step S103, the application program starting method further comprises:
S104: when the application program receives an input event, controlling the ViewRootImpl class in the operating environment parameters, instead of a ViewRootImpl class in an operating system of the smart terminal, to recognize and report the input event.

Preferably, in step S101, the input events include an external input event corresponding to an external input device connected to the smart terminal and a touch input event corresponding to a touch screen of the smart terminal.

Preferably, in step S101, the sandbox program is preset in the application layer of the operating system of the smart terminal.

The present invention further discloses an application program starting apparatus, comprising:
a presetting module configured to preset at least one sandbox program in a smart terminal, wherein a set of operating environment parameters for processing input events are self-defined in the sandbox program;
an operating module connected to the presetting module and configured to operate the sandbox program; and
a starting module connected to the presetting module and configured to start an application program based on the operating environment parameters.

Preferably, when the presetting module presets the sandbox program, the operating environment parameters include member variables of a ViewRootImpl class.

Preferably, the application program starting apparatus further comprises:
a processing module connected to the starting module and the presetting module and configured to, when the application program receives an input event, control the ViewRootImpl class in the operating environment parameters, instead of a ViewRootImpl class in an operating system of the smart terminal, to recognize and report the input event.

Preferably, when the presetting module presets the sandbox program, the input events include an external input event corresponding to an external input device connected to the smart terminal and a touch input event corresponding to a touch screen of the smart terminal.

Preferably, the presetting module presets the sandbox program in an application layer of the operating system of the smart terminal.

The present invention further discloses a computer readable storage medium configured to store a computer program therein, which, when being performed by a processor, implements the following steps:
S105: presetting at least one sandbox program in a smart terminal, wherein a set of operating environment parameters for processing input events are self-defined in the sandbox program;
S106: operating the sandbox program; and
S107: starting an application program based on the operating environment parameters.

Preferably, in step S105, the operating environment parameters include member variables of a ViewRootImpl class.

Preferably, after step S107, the application program starting method further comprises:
S108: when the application program receives an input event, controlling the ViewRootImpl class in the operating environment parameters, instead of a ViewRootImpl class in an operating system of the smart terminal, to recognize and report the input event.

Preferably, in step S105, the input events include an external input event corresponding to an external input device connected to the smart terminal and a touch input event corresponding to a touch screen of the smart terminal.

Preferably, in step S105, the sandbox program is preset in the application layer of the operating system of the smart terminal.

After the above-mentioned technical solutions are adopted, compared with the prior art, the present invention has the following beneficial effects:
1. interception and injection of the input events are realized on an application layer, without modifying framework layer codes of the Android operating system, and the transplantation workload of the framework layer during operating system version upgrade is greatly reduced;
2. a model of the sandbox program is provided, such that an ordinary application program can operate inside the sandbox program, and the reliability of an application program boundary is ensured, thereby avoiding user data theft caused by a third-party operating system or a hacker program; and
3. the operation can be performed on different operating system versions, so that the universality is improved.

### BRIEF DESCRIPTION OF THE DRAWINGS

FIG. 1 is a schematic flowchart of an application program starting method in a preferred embodiment in accordance with the present invention;
FIG. 2 is a structural block diagram of an application program starting apparatus in a preferred embodiment in accordance with the present invention;
FIG. 3 is a schematic flowchart of a computer program on a computer readable storage medium in a preferred embodiment in accordance with the present invention; and
FIG. 4 is a block diagram of an operating system in an application program starting method in a preferred embodiment in accordance with the present invention.

Reference symbols represent the following components:
10-application program starting apparatus; 11-presetting module; 12-operating module; 13-starting module; 14-processing module.

### DETAILED DESCRIPTION

The advantages of the present invention are further described hereinafter with reference to the drawings and the specific embodiments.

The exemplary embodiments are described in detail herein, and are illustratively shown in the drawings. When the following description refers to the drawings, unless otherwise indicated, the same numbers in different drawings indicate the same or similar elements. The embodiments described in the following exemplary embodiments do not represent all embodiments consistent with the present disclosure. On the contrary, they are merely examples of devices and methods consistent with some aspects of the present disclosure described in detail in the appended claims.

The terms used in the present disclosure are for the purpose of describing particular embodiments only and are not intended to limit the present disclosure. The singular forms of "a", "said" and "the" used in the present disclosure and the appended claims are also intended to include the plural forms, unless other meanings are clearly indicated by the context. It should also be understood that the term "and/or" used herein refers to and includes any or all possible combinations of one or more associated listed items.

It shall be understood that although the terms first, second, third, etc. may be used to describe various information in the present disclosure, the information should not be limited to these terms. These terms are only used to distinguish the information of the same type from each other. For example, the first information can also be referred to as the second information, and similarly, the second information can also be referred to as the first information without departing from the scope of the present disclosure. Depending on the context, the word "if" used herein can be explained as "in the case of", "when" or "in response to determine".

In the description of the present invention, it should be understood that the orientation or position relation indicated by the terms "longitudinal", "lateral", "upper", "lower", "front", "rear", "left", "right", "vertical", "horizontal", "top", "bottom", "inside", "outside" and the like is based on the orientation or position relation shown in the drawings, which is only used for convenience of description of the present invention and simplification of description instead of indicating or implying that the indicated device or element must have a specific orientation, and be constructed and operated in a specific orientation, and thus should not be understood as a limitation to the present invention.

In the description of the present invention, the terms "installation", "connected" and "connection" should be understood in broad sense unless otherwise specified and defined. For example, they can be mechanical connection or electrical connection, can also be connected inside two components, can be directly connected, and can also be indirectly connected through an intermediate medium. The specific meanings of the above terms can be understood in a specific case by those of ordinary skills in the art.

In the following description, the postfixes such as "module", "component" or "unit" used to indicate elements are only used to facilitate the description of the present invention and have no specific meanings in themselves. Therefore, the "module" and "component" can be used in a mixed way.

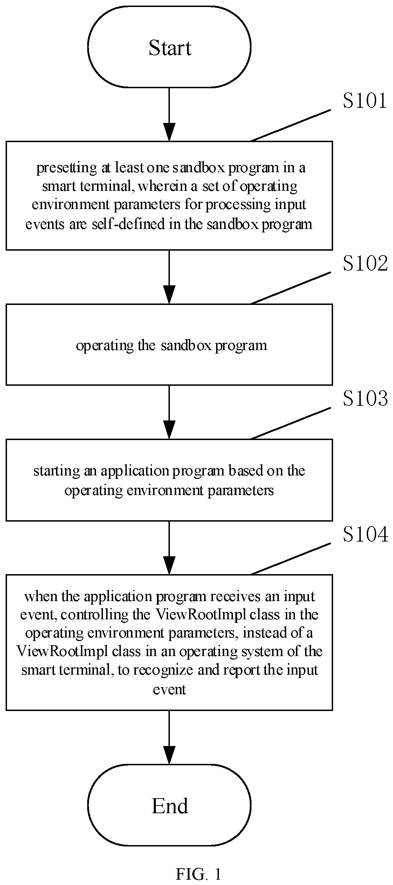

FIG. 1 is a schematic flowchart of an application program starting method in a preferred embodiment in accordance with the present invention. The application program starting method comprises the following steps:
S101, presetting at least one sandbox program in a smart terminal, wherein a set of operating environment parameters for processing input events are self-defined in the sandbox program.

The sandbox program, referred to as a sandbox, is used to construct an environment that restricts a program from operating, and thus is a typical security model. The sandbox program restricts the program from operating to protect system resources on the one hand, and on the other hand to protect the program itself from malicious access and data leakage. The system resources in turn include CPU, memory, file systems, networks and the like. For example, in Java language development, the core of its security model is the sandbox. Different sandboxes can be set corresponding to different system resource access restrictions. All Java programs can operate in a specified sandbox, and security policies can be customized. The sandbox program includes permissions, code sources, protection domains, policy files, keystores and other elements, and is used to set permission operations, protection scopes, and various security policies for the protected program codes. The Java sandbox controls the permission to execute an application program by rewriting a class loader and a security manager, and setting a global security manager.

In this embodiment, the sandbox program is set in the smart terminal, and a set of operating environment parameters for processing an input event is defined in the smart terminal, and is stored in the smart terminal in the form of a configuration file. For an Android operating system, the operation of various applications requires the support of an operating environment. The operating environment is a broad concept, embodied as a collection of classes or services that have been defined by various operating systems related to the application programs, especially attributes and member variables of each class, thereby supporting various parameters required for the application programs to operate. In this step, when the sandbox program is preset, the operating environment parameters defined in the sandbox program are distributed in a class related to processing the input event. The operating environment parameters may be member variables of an individual class, or the entire classes may be redefined. In this step, the class related to processing the input event or member variables in the class are redefined in the sandbox program, and the monitoring of the input event is preset. When an input event occurs, the operating environment parameters defined in the sandbox program operate to process the input event. The operating environment parameters defined in the sandbox program are not limited to modifying the operating environment of the application layer, but may also involve a system runtime library layer or a driver layer. The operating environment parameters are also not limited to a certain class, method or service, but may be a collection of a plurality of classes, methods or services, so as to achieve the required operating environment of the application program.

S102, Operating the sandbox program.

In this step, the sandbox program operates. The corresponding operating environment parameters can be provided for the subsequent application program operation only when the sandbox program operates first. The sandbox program may operate in a plurality of manners. In the development stage, the sandbox program can be started by operating commands in a development environment, for example, operating a command to open the security manager in Java; or the operation of the sandbox program may also be associated with the corresponding operation. For example, an application program that needs to operate in the sandbox program is placed in the same folder, and when the user opens the folder, the sandbox program is triggered to operate. After the sandbox program operates, the monitoring of a relevant interface of the input event is started to intercept the processing of the input event. The original operating environment parameters in the operating system no longer work.

S103: Starting an application program based on the operating environment parameters.

In this step, the application program is started, and the operation of the application program is based on the preset operating environment parameters in the sandbox program. A protection domain can be preset in the sandbox program, that is, which application programs are associated in the sandbox program are defined. After the sandbox program operates, the associated application programs in the protection domain will operate according to the preset operating environment parameters of the sandbox program. The application program may be started to receive an operation start of the user. For example, the user performs a touch operation on an icon of the application program to open the application program. It should be noted that the application program and the sandbox program are in different processes, but will inherit a runtime environment of the sandbox application, and from the outside, it is equivalent to that the application program operates inside the sandbox program. The interaction between the application program and the operating system is implemented through the sandbox program. That is, various input events acquired by the application program must be processed based on the operating environment parameters defined in the sandbox program. The original relevant operating environment parameters in the operating system are not visible to the application program. In addition to the operating environment parameters defined in the sandbox program, other operating environment parameters still support the operation of the application program according to the configuration in the operating system. From the perspective of the affiliation between the application program and the sandbox program, the application program is a client process of the sandbox program, and the sandbox program is a host process of the application program. The application program may communicate with the sandbox program based on the operating environment when the sandbox program is operating. The sandbox program may expose a preset API to the application program and provide corresponding functions, and in addition to processing the input event, may also provide functions such as acquiring a system state, geographic location information, and the like.

As a further improvement of the application program starting method, in step S101, the operating environment parameters include member variables of a ViewRootImpl class. This improved embodiment optimizes the operating environment parameters self-defined in the sandbox program, i.e., member variables of the ViewRootImpl class. The ViewRootImpl class (ViewRootImpl) is an important class in the application layer of the Android operating system, and functions to fill views to complete specific view management tasks. The ViewRootImpl class also communicates with a window manager service to manage an interface to be displayed. In this embodiment, each input event is processed by customizing the member variables of the ViewRootImpl class, and the result of the input event is reflected in the display interface.

Further, after step S103, the application program starting method further comprises:
S104: when the application program receives an input event, controlling the ViewRootImpl class in the operating environment parameters, instead of a ViewRootImpl class in an operating system of the smart terminal, to recognize and report the input event.

In this improved embodiment, the step S104 is implemented on the basis that the operating environment parameters include member variables of the ViewRootImpl class. When the touch screen of the smart terminal or other input device receives an input operation, an underlaying driver of the smart terminal recognizes the input operation and forms an input event, and then reports the input event layer by layer. In this step, the processing course of the input event is achieved. When the application program monitors the occurrence of an input event, the application program recognizes the input event according to the ViewRootImpl class provided by the sandbox program, and reports the input event to other functional program modules for processing. The security policy of the sandbox program may define a path for acquiring operating environment parameters performed when an input event occurs, so as to implement the replacement of the ViewRootImpl class. In the prior art, if no sandbox program is operating, the application program will process the input event according to the operating environment defaulted by the operating system, especially cannot effectively recognize different input events, except for the input events of the same type, e.g., a touch screen input event.

As a further improvement of the application program starting method, in step S101, the input events include an external input event corresponding to an external input device connected to the smart terminal and a touch input event corresponding to a touch screen of the smart terminal. The improved embodiment further defines the types of the input events. When the user needs to operate a lot of complicated operations by using the smart terminal, such as playing games, it is difficult to meet the interaction requirements only by input operations on the touch screen of the smart terminal, and an auxiliary input operation after communicating with the smart terminal through an external input device, such as a joystick is further required. The smart terminal operating system in the prior art generates an external input event for an input operation received by the external input device, and generates a touch input event for an input operation received by the touch screen of the smart terminal. However, the application layer of the operating system cannot recognize and distinguish the above two input events, resulting in that the two input events cannot coexist and the user can only select one input operation. In this embodiment, the sandbox program monitors the input event reported from an interface of the framework layer of the operating system, and recognizes and processes different input events through a customized ViewRootImpl class, such that the application program (such as a game program) has the ability to recognize touch screen operations and external device input operations. Therefore, the input operation modes are enriched to improve the experience effect.

As a further improvement of the application program starting method, in step S101, the sandbox program is preset in the application layer of the operating system of the smart terminal. The sandbox program works in the application layer of the operating system, and the operating environment parameters involved are also mainly classes or methods in the application layer. An event is acquired from the framework layer of the operating system during work, without modifying the framework layer itself. In this way, even if the operating system is upgraded, only the sandbox program needs to be transplanted in the application layer, without involving code modification in other layers, thereby reducing the transplantation workload. Meanwhile, since the application program directly interacts with the sandbox program instead of interacting with the operating system, the sandbox program acts as a barrier, which can guarantee the security of data and prevent data leakage [as in the previous case, whether "it can be easily applied to different Android system (ROM) platforms at the same time" is emphasized here]. Meanwhile, the sandbox program and the application program can be easily applied to different Android operating system (ROM) platforms, and have better universality.

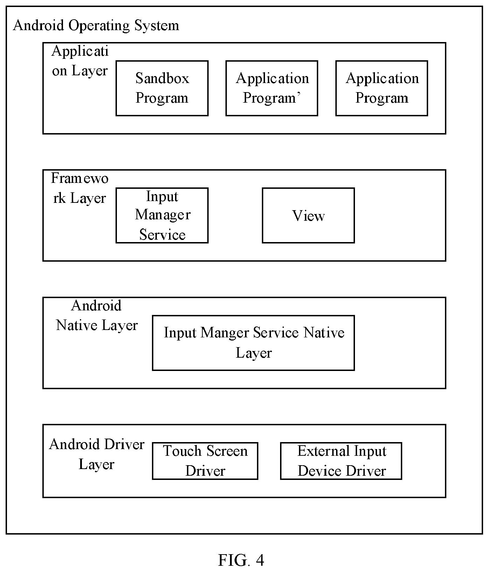

FIG. 4 is a block diagram of an operating system in an application program starting method in a preferred embodiment in accordance with the present invention. FIG. 4 displays various layers under the Android operating system, including an application layer, a framework layer, an Android native layer and an Android driver layer, wherein each layer only displays various modules related to the present invention. The Android driver layer includes a touch screen driver and an external input device driver, which are used to recognize the input operations received by the touch screen and the external input device, and form the input events. The Android native layer includes an input manager service native library, which provides a native support for input event processing. The framework layer includes input manager services and views. The input manager services manage the input events and reports them to the application layer. The views control the display of the display interface. The sandbox program and the application program involved in the present invention are both in the application layer. The application program originally installed in the operating system becomes an application program' after operating based on the sandbox program, and the application program' operates based on the operating environment provided by the sandbox program. The input event reported from the framework layer goes through the sandbox program and is then reported to the application program'. The customization requirement of the input events is achieved by modifying the operating environment inside the sandbox program, such that customized capabilities are acquired from the application program' started inside the sandbox, thereby providing more scalability and security for the application programs.

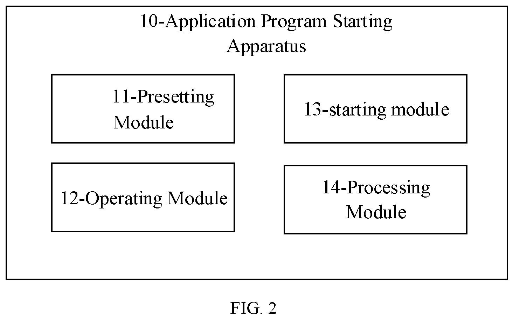

FIG. 2 is a structural block diagram of an application program starting apparatus 10 in a preferred embodiment in accordance with the present invention. The application program starting apparatus 10 comprises a presetting module 11, an operating module 12, and a starting module 13.

The presetting module 11 is configured to preset at least one sandbox program in a smart terminal, wherein a set of operating environment parameters for processing input events are self-defined in the sandbox program. The presetting module 11 configures a configuration file of the sandbox program. For example, the sandbox program in Java includes elements such as permissions, code sources, protection domains, policy files, keystores, etc. The operating environment parameters are recorded. The permission to execute the application program is controlled by rewriting a class loader and a security manager, and setting a global security manager. The operating environment parameters self-defined by the presetting module 11 in the sandbox program are related to the processing of input events of the smart terminal, and may be member variables of individual classes, or the entire classes are redefined. The operating environment parameters are also not limited to a certain class, method or service, but may be a collection of a plurality of classes, methods or services, to achieve a required operating environment of the application program.

The operating module 12 is connected to the presetting module 11 and configured to operate the sandbox program. The operation module 12 may be an operation instruction in a development environment; or may associate a user interaction operation in the application layer with the sandbox program. The sandbox program operates in the case of the user interaction operation. After the sandbox program operates, the monitoring of a relevant interface of the input event is started to intercept the processing of the input event. The original operating environment parameters in the operating system no longer work.

The starting module 13 is connected to the presetting module 11 and configured to start an application program based on the operating environment parameters. When the starting module 13 starts the application program, the presetting module 11 acquires operating environment parameters required for operation, without directly interacting with the operating system. The starting module 13 may be started to receive a starting operation of the user. For example, the user performs a touch operation on an icon of the application program to open the application program. In addition to the operating environment parameters defined in the sandbox program, other operating environment parameters still support the operation of the application program according to the configuration in the operating system.

As a further improvement of the application program starting apparatus 10, when the presetting module 11 presets the sandbox program, the operating environment parameters include member variables of a ViewRootImpl class. Each input event is processed by customizing the member variables of the ViewRootImpl class, and the result of the input event is reflected in the display interface.

Further, the application program starting apparatus 10 further comprises:
a processing module 14 connected to the starting module 13 and the presetting module 11 and configured to, when the application program receives an input event, control the ViewRootImpl class in the operating environment parameters, instead of a ViewRootImpl class in an operating system of the smart terminal, to recognize and report the input event. After the starting module 13 starts the application program, the processing module 14 monitors whether the application program receives the input event. When the input event happens, the processing module 14 recognizes the input event according to the ViewRootImpl class provided by the sandbox program, and reports the input event to other functional program modules for processing.

As a further improvement of the application program starting apparatus 10, when the presetting module 11 presets the sandbox program, the input events include an external input event corresponding to an external input device connected to the smart terminal and a touch input event corresponding to a touch screen of the smart terminal. The external input event and the touch input event have different identification bits. The preset operating environment of the preset module 11 can recognize the identification bits of the above two input events and process the input events.

As a further improvement of the application program starting apparatus 10, the presetting module 11 presets the sandbox program in the application layer of the operating system of the smart terminal. The sandbox program works in the application layer of the operating system, and the operating environment parameters involved are also mainly classes or methods in the application layer. The event is acquired from the framework layer of the operating system during work, without modifying the framework layer itself.

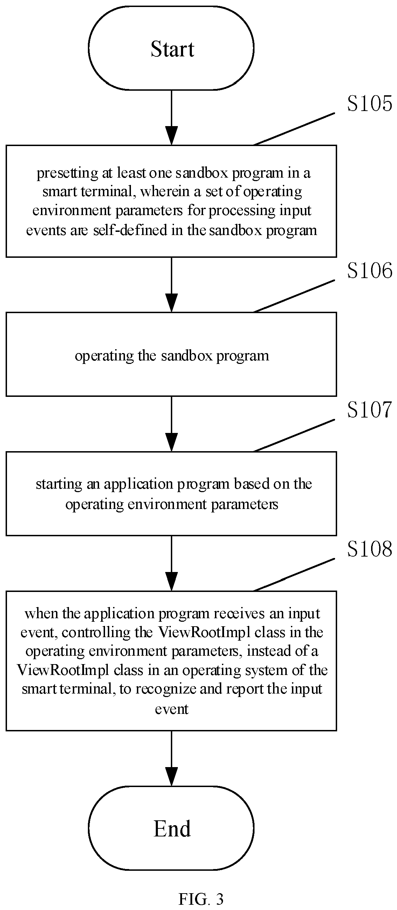

FIG. 3 is a schematic flowchart of a computer program on a computer readable storage medium in a preferred embodiment in accordance with the present invention. A computer program is stored in the computer readable storage medium and configured to, when being performed by a processor, implement the following steps:
S105: presetting at least one sandbox program in a smart terminal, wherein a set of operating environment parameters for processing input events are self-defined in the sandbox program;
S106: operating the sandbox program; and
S107: starting an application program based on the operating environment parameters.

As a further improvement of the computer program, in step S105, the operating environment parameters include member variables of a ViewRootImpl class.

Further, after step S107, the application program starting method further comprises:
S108: when the application program receives an input event, controlling the ViewRootImpl class in the operating environment parameters, instead of a ViewRootImpl class in an operating system of the smart terminal, to recognize and report the input event.

As a further improvement on the computer program, in step S105, the input events include an external input event corresponding to an external input device connected to the smart terminal and a touch input event corresponding to a touch screen of the smart terminal.

As a further improvement on the computer program, in step S105, the sandbox program is preset in the application layer of the operating system of the smart terminal.

The method steps of the computer program are consistent with the implementation of the application program starting method in the present invention, and will not be described in detail.

It should be noted that the embodiments of the present invention have better implementation and do not limit the present invention in any way. Any person skilled in the art may use the technical content disclosed above to change or modify these embodiments into equivalent effective embodiments. However, any corrections or equivalent changes and modifications made to the above embodiments based on the technical essence of the present invention without departing from the technical solution of the present invention still fall within the scope of the technical solution of the present invention.

## Claims

1. An application program starting method, comprising the following steps:
S101: presetting at least one sandbox program in a smart terminal, wherein a set of operating environment parameters for processing input events are self-defined in the sandbox program;
S102: operating the sandbox program; and
S103: starting an application program based on the operating environment parameters.

2. The application program starting method according to claim 1, wherein
in step S101, the operating environment parameters include member variables of a ViewRootImpl class.

3. The application program starting method according to claim 2, wherein
after step S103, the application program starting method further comprises:
S104: when the application program receives an input event, controlling the ViewRootImpl class in the operating environment parameters, instead of a ViewRootImpl class in an operating system of the smart terminal, to recognize and report the input event.

4. The application program starting method according to any one of claims 1 to 3, wherein
in step S101, the input events include an external input event corresponding to an external input device connected to the smart terminal and a touch input event corresponding to a touch screen of the smart terminal.

5. The application program starting method according to any one of claims 1 to 3, wherein
in step S101, the sandbox program is preset in an application layer of the operating system of the smart terminal.

6. An application program starting apparatus, comprising:
a presetting module configured to preset at least one sandbox program in a smart terminal, wherein a set of operating environment parameters for processing input events are self-defined in the sandbox program;
an operating module connected to the presetting module and configured to operate the sandbox program; and
a starting module connected to the presetting module and configured to start an application program based on the operating environment parameters.

7. The application program starting apparatus according to claim 6, wherein
when the presetting module presets the sandbox program, the operating environment parameters include member variables of a ViewRootImpl class.

8. The application program starting apparatus according to claim 7, further comprising
a processing module connected to the starting module and the presetting module and configured to, when the application program receives an input event, control the ViewRootImpl class in the operating environment parameters, instead of a ViewRootImpl class in an operating system of the smart terminal, to recognize and report the input event.

9. The application program starting apparatus according to any one of claims 6 to 8, wherein
when the presetting module presets the sandbox program, the input events include an external input event corresponding to an external input device connected to the smart terminal and a touch input event corresponding to a touch screen of the smart terminal.

10. The application program starting apparatus according to any one of claims 6 to 8, wherein
the presetting module presets the sandbox program in the application layer of the operating system of the smart terminal.

11. A computer readable storage medium configured to store a computer program therein, which, when being performed by a processor, implement the following steps:
S105: presetting at least one sandbox program in a smart terminal, wherein a set of operating environment parameters for processing input events are self-defined in the sandbox program;
S106: operating the sandbox program; and
S107: starting an application program based on the operating environment parameters.

12. The computer readable storage medium according to claim 11, wherein
in step S105, the operating environment parameters include member variables of a ViewRootImpl class.

13. The computer readable storage medium according to claim 12, wherein
after step S107, the application program starting method further comprises:
S108: when the application program receives an input event, controlling the ViewRootImpl class in the operating environment parameters, instead of a ViewRootImpl class in an operating system of the smart terminal, to recognize and report the input event.

14. The computer readable storage medium according to any one of claims 11 to 13, wherein
in step S105, the input events include an external input event corresponding to an external input device connected to the smart terminal and a touch input event corresponding to a touch screen of the smart terminal.

15. The computer readable storage medium according to any one of claims 11 to 13, wherein
in step S105, the sandbox program is preset in the application layer of the operating system of the smart terminal.
